(19)

Europäisches
Patentamt

European
Patent Office

Office européen
des brevets

(11)  **EP 2 933 632 A2**

(12)  **EUROPEAN PATENT APPLICATION**

(43) Date of publication:
21.10.2015  Bulletin 2015/43

(51) Int Cl.:
*G01N 29/02* (2006.01)  *G01N 29/036* (2006.01)
*G01N 29/34* (2006.01)  *G01N 29/36* (2006.01)
*G01N 29/24* (2006.01)  *H04B 1/44* (2006.01)

(21) Application number: 15154940.9

(22) Date of filing: 13.02.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.04.2014  JP 2014082742

(71) Applicant: DENSO CORPORATION
Kariya City
Aichi 448-8661 (JP)

(72) Inventors:
• Wang, Fan
Kariya-city, Aichi 448-8661 (JP)
• Shibata, Takayuki
Kariya-city, Aichi 448-8661 (JP)

(74) Representative: Vigand, Philippe et al
Novagraaf International SA
3 chemin de l'Echo
1213 Onex Geneva (CH)

(54)  **Signal processing apparatus for a surface acoustic wave sensor**

(57)  A control circuit (7) sets switches (13, 21) in an off-state so that mixers (23i, 23q) mix signals leaking from the mixers (23i, 23q) to a low noise amplifier (22) side and reflected by the low noise amplifier (22). Low-pass filters (24i, 24q) reduce double frequency components of output signals of the mixers (23i, 23q) and input the signals to digital signal processing circuits (27i, 27q), respectively. The digital signal processing circuits (27i, 27q) calculate DC offset components of an I component SI and a Q component SQ, respectively.

## FIG. 1

EP 2 933 632 A2

**Description**

The present invention relates to a signal processing apparatus for a surface acoustic wave sensor, which detects a physical quantity by using a surface acoustic wave device.

A signal processing apparatus for a surface acoustic wave sensor (SAW sensor) of this kind includes, for example, a surface acoustic wave device (SAW device), a transmitter and a receiver. This signal processing apparatus detects a physical quantity (for example, distortion) in the following manner. When the transmitter outputs an electric signal to driving electrodes of the SAW device, the driving electrodes transduce the electric signal to mechanical vibration. The SAW device generates, in response to the mechanical vibration, a surface acoustic wave, which propagates along a propagation path of a substrate, that is, through the SAW device. The surface acoustic wave reflects at a reflector and the driving electrodes transduce a reflected surface acoustic wave into an electric signal. The receiver receives this electric signal as an output signal of the SAW device. In the propagation path of the SAW device, a phase of the surface acoustic wave changes in accordance with a change in electrical and mechanical characteristics of the propagation path. For this reason, the physical quantity is detected by detecting a phase difference between the electric signal received by the receiver and a reference signal.

One example of this kind of signal processing apparatuses for a surface acoustic wave sensor is disclosed in JP2008-151520A. In this exemplary apparatus, a driving signal oscillator outputs a driving signal and reference signals I and Q. The reference signal I is in phase with the driving signal. The reference signal Q is phase-shifted by 90 degrees from the driving signal and has the same amplitude as the reference signal I. A multiplier circuit inputs alternately the reference signals I and Q and inputs an electric signal, which is produced by conversion of an ultrasonic wave signal, and outputs a signal by multiplying those signals.

The receiver mixes the output signal of the SAW device and the reference signal of the same frequency by a mixer to detect the phase difference. When the reference signal leaks to the SAW device side through the mixer, this leak signal reflects at the SAW device side and self-mixes with the reference signal. A component resulting from the leak signal results in a DC offset. This DC offset may be reduced by connecting a resistor in series. However, the resistor adversely becomes a source of noise generation and signal attenuation.

It is therefore an object of the present invention to provide a signal processing apparatus for a surface acoustic wave sensor, which can detect influence of a DC offset component arising from leaking of a reference signal from a mixer to an amplifier side while limiting use of circuit elements forming a source of noise generation and signal attenuation.

According to one aspect of the present invention, a signal processing apparatus for a surface acoustic wave device comprises at least a control circuit, a transmitter and a receiver.

The transmitter includes an oscillator for outputting a differential signal of a predetermined frequency and a transmission changeover switch. The transmission changeover switch is configured to turn on and off a connection between the surface acoustic wave device and the oscillator under control of the control circuit. The transmitter is configured to transmit the differential signal of the oscillator to the surface acoustic wave device as a transmission signal.

The receiver includes an amplifier, a mixer and a filter. The mixer mixes an amplifier output signal of the amplifier with the differential signal of the oscillator. The filter reduces a frequency component, which is included in a mixer output signal of the mixer and twice as high as the predetermined frequency. The receiver is configured to receive a sensor reflection signal as a reception signal, which results from propagation and reflection of the transmission signal in the surface acoustic device, and mixes the reception signal with the differential signal outputted from the oscillator as a reference signal by the mixer.

The receiver includes a calculation circuit for calculating a filter output signal of the filter as a DC offset component when the transmission changeover switch is controlled to be in an off-state by the control circuit. The filter output signal of the filter is produced by mixing the reference signal of the oscillator and an amplifier reflection signal, which results from the reference signal of the oscillator leaking from the mixer to the amplifier and reflected by the amplifier, and by reducing the frequency component, which is twice as high as the predetermined frequency.

FIG. 1 is an electric block diagram showing schematically a circuit configuration of a signal processing apparatus for a surface acoustic wave sensor according to a first embodiment of the present invention;

FIG. 2A is a plan view showing schematically a SAW device;

FIG. 2B is a longitudinal side view of the SAW device taken along a line A-A in FIG. 2A;

FIG. 3 is a graph showing a DC offset component;

FIG. 4 is a schematic view showing leaking of a reference signal;

FIG. 5 is a time chart showing an I component SI and a Q component SQ of the DC offset component before correction;

FIG. 6 is a time chart showing an I component SI and a Q component SQ of the DC offset component after correction;

FIG. 7 is a time chart showing schematically an operation of a signal processing apparatus for a surface acoustic wave sensor according to a second embodiment of the present invention;

FIG. 8 is a time chart showing schematically an operation of a signal processing apparatus for a surface acoustic wave sensor according to a third embodiment of the present invention;

FIG. 9 is a time chart showing schematically an operation of a signal processing apparatus for a surface acoustic wave sensor according to a fourth embodiment of the present invention;

FIG. 10 is an electric block diagram showing schematically a circuit configuration of a signal processing apparatus for a surface acoustic wave sensor according to fifth and sixth embodiments of the present invention;

FIG. 11 is a time chart showing schematically an operation of a signal processing apparatus for a surface acoustic wave sensor according to the fifth embodiment;

FIG. 12 is a time chart showing schematically an operation of a signal processing apparatus for a surface acoustic wave sensor according to the sixth embodiment;

FIG. 13 is a plan view showing a SAW device according to a seventh embodiment of the present invention;

FIG. 14 is a time chart showing schematically operations of a signal processing apparatus for a surface acoustic wave sensor according to seventh and eighth embodiments of the present invention; and

FIG. 15 is a plan view showing schematically a SAW device according to the eighth embodiment.

A signal processing apparatus for a surface acoustic wave sensor will be described with reference to plural embodiments shown in the drawings. Structural parts, which perform the same or similar operations, are designated with the same or similar reference numerals throughout the embodiments for simplicity.

(First Embodiment)

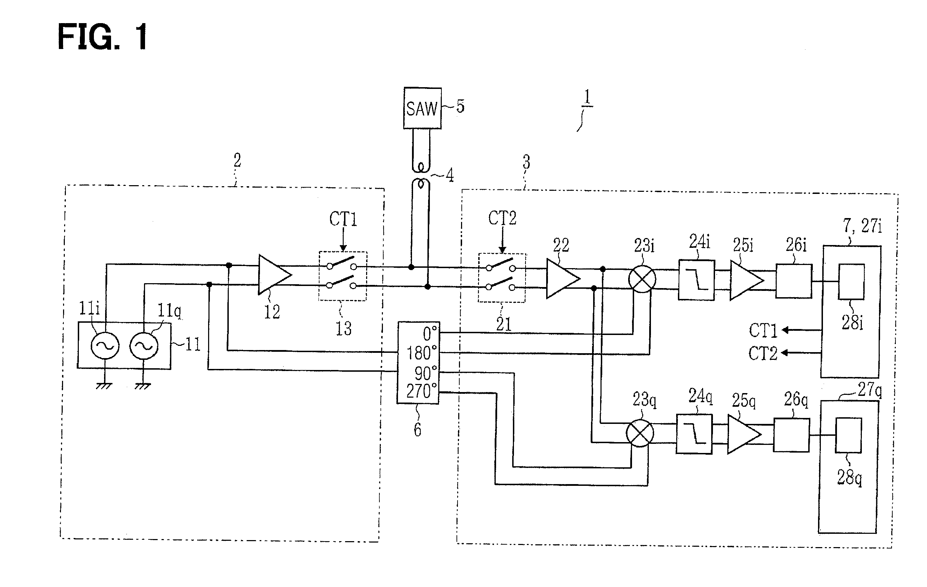

FIG. 1 to FIG. 6 shows a first embodiment. As shown in FIG. 1, a signal processing apparatus 1 for a surface acoustic wave sensor (SAW sensor) is formed of a signal transmitter 2, a signal receiver 3, an antenna 4, a surface acoustic wave device (SAW device) 5 and a $\pi/2$ phase shifter 6. The transmitter 2, the receiver 3 and the $\pi/2$ phase shifter 6 may be formed in a single semiconductor integrated circuit. The receiver 3 includes a control circuit 7 therein. The control circuit 7 generates on/off control signals CT1 and CT2, which are applied to a transmission changeover switch 13 and a reception changeover switch 21 as described below. The control circuit 7 may be a microcomputer, for example.

The transmitter 2 includes an oscillator 11 (11i, 11q) and an amplifier 12 in addition to the transmission changeover switch 13. The oscillator 11, more specifically 11 I and 11q output to the amplifier 12 un-modulated oscillation signals, which have same frequencies (for example, 160 MHz) and opposite phases. The oscillator 11 outputs the oscillation signals to the amplifier 12, as a differential signal.

Receiving the differential signal applied from the oscillator 11, the amplifier 12 amplifies the differential signal and outputs it to the transmission changeover switch 13. The transmission changeover switch 13 is changed over to the on-state or the off-state in response to the control signal applied from the control circuit 7. The transmission changeover switch 13, which is initially in the off-state, is turned on by the control circuit 7 to connect the amplifier 12 and the antenna 4. The amplified differential signal is outputted to the antenna 4 in a pulsed form through the transmission changeover switch 13. The antenna 4 transmits the differential signal received from the amplifier 12 to the SAW device 5 wirelessly as a radio signal.

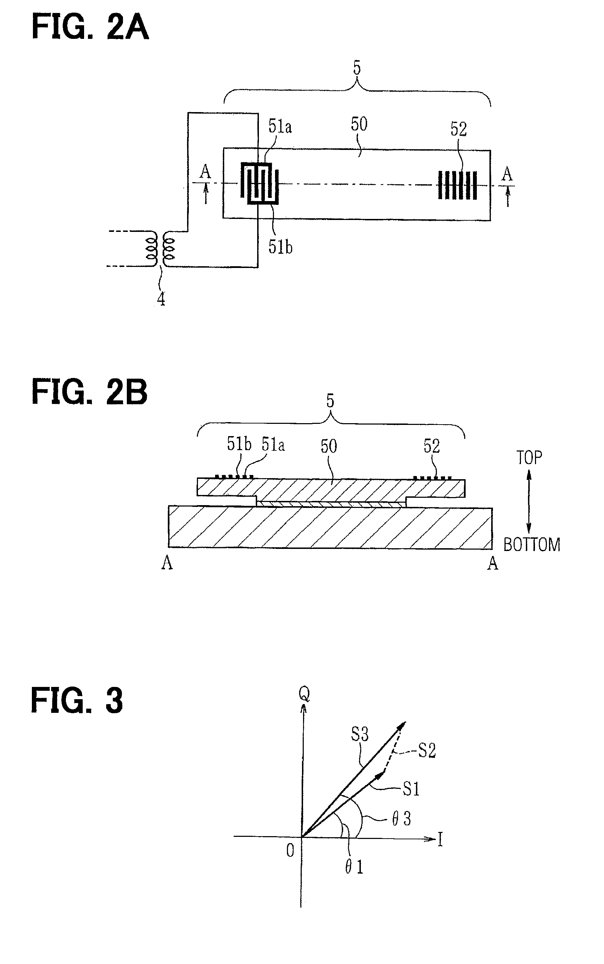

The SAW device 5, which forms a SAW sensor is configured as shown in FIG. 2A and FIG. 2B. The SAW device 5 is a delay line type and includes driving electrodes 51a, 51b and a reflector 52, which are formed on a surface of a substrate 50. The driving electrodes 51a, 51b and the reflector 52 are located at one end and the other end of the substrate 50, respectively, with a spacing threbetween in the longitudinal direction of the substrate 50. The substrate 50 is a piezoelectric substrate made of, for example, piezoelectric material. Each of the driving electrodes 51a and 51b has plural comb teeth. The driving electrodes 51a and 51b are located to face each other in a direction perpendicular to a direction of propagation of the surface acoustic wave with a spacing therebetween.

The comb teeth of the driving electrodes 51a and 51b are interleaved alternately in the direction of propagation (direction of reflection) of the surface acoustic wave. The driving electrodes 51a and 51b vibrate in response to the electric signal applied through the antenna 4. The driving electrodes 51a and 51b have a fixed natural frequency at the time of vibration. For this reason, an oscillation frequency of the oscillators 11i and 11q is set in correspondence to the natural frequency of the driving electrodes 51a and 51b. This oscillation frequency may be set to be in a several GHz band.

The SAW device 5 receives a transmission signal of the transmitter 2 and the antenna 4, that is, the electric signal transmitted through the antenna 4 by the driving electrodes 51a and 51b and reflects it by the reflector 52. The reflector 52 reflects a received signal towards the antenna 4 through the driving electrodes 51a and 51b. The antenna 4 transmits a reflected signal as a radio wave (sensor reflection signal) to be received by the receiver 3.

A reception changeover switch 21 is changed over to an on-state or an off-state in response to the control signal CT2 applied from the control circuit 7. The control circuit 7 changes over the transmission changeover switch 13 to the off-state while the amplified differential signal is propagating through the SAW device 5 after the amplifier 12 outputted the amplified differential signal to the antenna 4. The control circuit 7 changes over the reception changeover switch 21 to the on-state while the amplified differential signal is still propagating through the SAW device 5. The signal reflected by the SAW device 5 is transmitted mostly to the receiver 3 side with the transmission changeover switch 13 being turned off.

The receiver 3 includes, together with the reception changeover switch 21, a low noise amplifier (LNA) 22, mixers 23i, 23q, low-pass filters 24i, 24q, amplifiers 25i, 25q, A/D converters 26i, 26q, and digital signal processing (DSP) circuits 27i, 27q, which are calculation circuits. The digital signal processing circuit 27i has a function of the control circuit 7 therein. The low noise amplifier 22 forms an initial-stage amplifier of the receiver 3. An amplified signal is applied to the mixers 23i and 23q.

The π/2 phase shifter 6 is provided between the oscillators 11i, 11q and the mixers 23i, 23q. The oscillators 11i and 11q output the oscillation signals to the π/2 phase shifter 6. The π/2 phase shifter 6 outputs four signals, which are phase-shifted by 90 degrees one another. The π/2 phase shifter 6 outputs two differential signals, which are orthogonal to each other (phase-shifted by 180 degrees), to each of the mixers 23i and 23q as reference signals.

The mixer 23i is formed as a passive mixer mixes, for example, and mixes the amplified differential signal amplified by the low noise amplifier 22 with one reference signal (0 degree and 180 degrees) outputted from the π/2 phase shifter 6. The mixer 23q is also formed as a passive mixer and mixes the amplified differential signal amplified by the low noise amplifier 22 with the other reference signal (90 degrees and 270 degrees) outputted from the π/2 phase shifter 6. Mixed signals of the mixers 23i and 23q are outputted to the low-pass filters 24i and 24q, respectively. The low-pass filters 24i and 24q cut off high-frequency components, which are in a doubled frequency band of the predetermined frequency, and pass low-frequency components of mixer output signals, which are mixed by the mixers 23i and 23q and down-converted, thereby outputting low-pass filtered signals to the amplifiers 25i and 25q, respectively.

The amplifiers 25i and 25q amplify the filter output signals, which are outputted after filtering by the low-pass filters 24i and 24q, and output amplified signals to the A/D converters 26i and 26q, respectively. The A/D converters 26i and 26q A/D-convert those signals and output A/D-converted signals to the digital signal processing circuits 27i and 27q, respectively. The digital signal processing circuits 27i and 27q have memories 28i and 28q internally and store outputted digital values therein, respectively.

In the signal processing apparatus 1 for the SAW device 5 described above, which is of the delay line type, when the transmitter 2 transmits the transmission signal in the pulse signal form to the SAW device 5 for a predetermined period through the antenna 4, the receiver 3 receives the a reflected signal in the pulse form from the SAW device 5 through the antenna 4 after an elapse of a predetermined propagation delay period τ. The reflected signal has generally the same period as the transmitted signal.

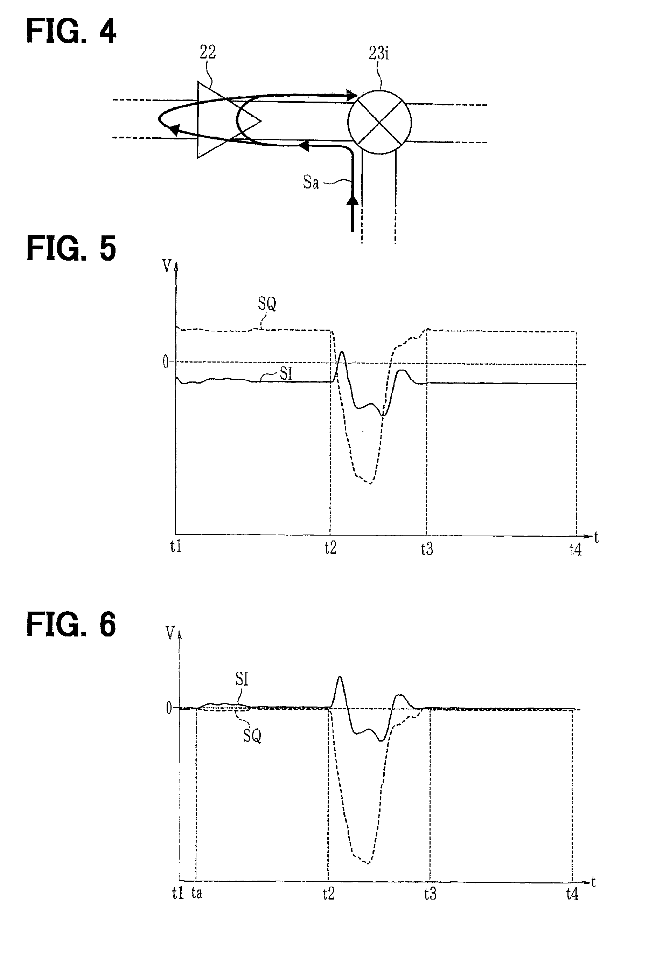

The signal processing apparatus 1 has the electrical configuration and the normal operation as described above. A signal processing method according to the above-described configuration will be described below. The signal processing apparatus 1 for a surface acoustic wave sensor detects a phase difference from I and Q outputs of two mixers, which are for in-phase and quadrature, respectively. As shown in FIG. 3, when an offset S2 is generated, the offset S2 is added as a vector component to a desired signal S1 and a signal component S3 is detected in the end. As a result, a phase component θ1, which should basically be calculated, includes an error and a phase component θ3 is detected in the end. An offset component α need be corrected or reduced. As shown in FIG. 4, this DC offset component α includes a component resulting from leaking of the reference signal Sa, which is received through the n/2 phase shifter 6, from the mixer 23i to the low-noise amplifier 22 side. This leak signal is reflected at the input and output sides of the low noise amplifier 22, transmitted to the mixer 23i again and mixed by the mixer 23i again. This component finally results in the DC offset component α.

The inventors of the present invention developed a method of removing the offset component α by detecting the offset component. This principle is described below. For example, an output voltage VTX_out transmitted from the transmitter 2 is assumed to be expressed as the following equation (1).

$$V_{TX\_out} = cos(\omega_c t) \qquad \cdots (1)$$

The receiver 3 receives the signal through the SAW device 5. The signal is expressed as the following equation (2) in consideration of a phase rotation amount θsaw of the SAW device 5.

$$V_{RX\_in} = A_{saw} cos(\omega_c t + \theta_{saw}) \qquad \cdots (2)$$

In this equation (2), Asaw indicates an attenuation amount in the SAW device 5. Assuming that the gain of the low noise amplifier 22 is 1 for simplified explanation, the I component after mixing by the mixer 23i is expressed ideally as the following equations (3) and (4).

$$I = V_{RX\_in} * LO1$$
$$= A_{saw} cos(\omega_c t + \theta_{saw}) * cos(\omega_c t)$$
$$= \frac{A_{saw}}{2} cos(2\omega_c t + \theta_{saw}) + \frac{A_{saw}}{2} cos(\theta_{saw}) \qquad \cdots (3)$$

$$\rightarrow \frac{A_{saw}}{2} cos(\theta_{saw}) \qquad \cdots (4)$$

The first term of the I component in the equation (3) varies with a frequency (angular frequency) $2 \times \omega c$. If the low-pass filter 24i is configured to reduce the frequency (angular frequency) $2 \times \omega c$, the I component after filtering operation by the low-pass filter 24i can be expressed as the following equation (5). That is, the digital signal processing circuit 27i stores in its memory 28i the I component of the equation (5).

Similarly, the Q component after filtering operation by the mixer 23q can be expressed as the following equation (6).

$$Q = V_{RX\_in} * LO2$$
$$= A_{saw} cos(\omega_c t + \theta_{saw}) * [-sin(\omega_c t)]$$
$$= -\frac{A_{saw}}{2} sin(2\omega_c t + \theta_{saw}) + \frac{A_{saw}}{2} sin(\theta_{saw}) \qquad \cdots (5)$$

$$\rightarrow \frac{A_{saw}}{2} sin(\theta_{saw}) \qquad \cdots (6)$$

The first term of the Q component in the equation (6) varies with the angular frequency $2 \times \omega c$. If the low-pass filter 24q is configured to reduce the frequency component $2 \times \omega c$, the Q component after filtering operation by the low-pass filter 24q can be expressed as the following equation (7). The digital signal processing circuit 27q stores in its memory 28q the Q component of the equation (7). The digital signal processing circuits 27i and 27q can thus calculate the attenuation amount Asaw and the phase rotation amount θsaw by using those calculated I component and Q component.

By taking the leak signals (voltages), which leak from the mixers 23i and 23q to the low noise amplifier 22 side, into consideration, the leak voltages Vleak_I and Vleak_Q can be expressed as the following equation (7).

$$\left. \begin{array}{l} V_{leak\_I} = \alpha * cos(\omega_c t) \\ V_{leak\_Q} = \beta * cos(\omega_c t) \end{array} \right\} \cdots (7)$$

Here, $\alpha$ in the equation (7) indicates the attenuation amount, by which the signal leaking from the mixer 23i to the low noise amplifier 22 side attenuates while reflecting at the input and output of the low noise amplifier 22 or the like and propagating back to the mixer 23i again. Here, $\beta$ in the equation (7) indicates the attenuation amount, by which the signal leaking from the mixer 23q to the low noise amplifier 22 side attenuates while reflecting at the input and output of the low noise amplifier 22 or the like and propagating back to the mixer 23q again. In the equation (7), the phase change of the leak signal is defined to be 0 for simplified explanation. Assuming that the gain of the low noise amplifier 22 is 1 for further simplified explanation, the I component can be expressed as the following equation (8).

$$I = (V_{RX\_in} + V_{leak\_I}) * LO1$$

$$= [A_{saw} cos(\omega_c t + \theta_{saw}) + \alpha * cos(\omega_c t)] * cos(\omega_c t)$$

$$= \frac{A_{saw}}{2} cos(2\omega_c t + \theta_{saw}) + \frac{A_{saw}}{2} cos(\theta_{saw}) + \frac{\alpha}{2} cos(2\omega_c t) + \frac{\alpha}{2} \quad \cdots(8)$$

$$\rightarrow \frac{A_{saw}}{2} cos(\theta_{saw}) + \frac{\alpha}{2} \quad \cdots(9)$$

The first term and the third term in the equation (8) vary with the frequency (angular frequency) $2 \times \omega c$. If the low-pass filter 24i is configured to reduce the I component, which corresponds to the frequency (angular frequency) $2 \times \omega c$, the I component after filtering operation by the low-pass filter 24i can be expressed as the equation (9). According to the circuit configuration described above, the digital signal processing circuit 27i stores in its memory 28i the I component of the equation (9).

Similarly, the Q component after filtering operation by the mixer 23q can be expressed as the following equation (10).

$$Q = (V_{RX\_in} + V_{leak\_Q}) * LO2$$

$$= [A_{saw} cos(\omega_c t + \theta_{saw}) + \beta * cos(\omega_c t)] * [-sin(\omega_c t)]$$

$$= -\frac{A_{saw}}{2} sin(2\omega_c t + \theta_{saw}) + \frac{A_{saw}}{2} sin(\theta_{saw}) - \frac{\beta}{2} sin(2\omega_c t) + \frac{\beta}{2} \quad \cdots(10)$$

$$\rightarrow \frac{A_{saw}}{2} sin(\theta_{saw}) + \frac{\beta}{2} \quad \cdots(11)$$

The first term and the third term in the equation (10) vary with the frequency (angular frequency) $2 \times \omega c$. If the low-pass filter 24q is configured to reduce the Q component, which corresponds to the frequency (angular frequency) $2 \times \omega c$, the Q component after filtering operation by the low-pass filter 24q can be expressed as the following equation (11).

The digital signal processing circuit 27q stores in its memory 28q the Q component of the equation (11). If the first term components in the equations (9) and (11) can be approximated to be substantially 0, only the second terms, which relate to the DC offset, remain in the equations (9) and (11).

DC offset components of the I component and Q component were observed by simulation based on the above-described points. The simulation was conducted by setting a leak signal leaking from the mixers 23i and 23q to the low noise amplifier 22 side to a level of -30dB level and inputting this signal level to the mixers 23i and 23q again. The low-pass filters 24i and 24q were adjusted appropriately to have cut-off frequencies, which reduce the frequency (angular frequency) $2 \times \omega c$.

The I component SI and the Q component SQ were acquired as shown in FIG. 5. In FIG. 5, the I component SI and the Q component SQ shown in a period from time t1 to time t2 and a period from time t3 to time t4 in FIG. 5 were acquired while maintaining the output of the oscillator 11 constant and turning the switches 13 and 21 to the off-state (for example, off-resistance of 1TΩ). The I component SI and the Q component SQ shown in a period from time t2 to time t3 were acquired while propagating the signal transmitted from the transmitter 2 through the SAW device 5.

As shown in FIG. 5, when the control circuit 7 turns off the switches 13 and 21 to the off-state during the period from time t1 to time t2 and the period from time t3 to time t4 and maintains the output of the oscillator 11 at the constant level, a DC offset component is outputted to the digital signal processing circuit 27i with respect to the I component SI. This offset component is influenced by a signal component, which results from signal leaking from the mixer 23i to the low noise amplifier 22 side and reflection by the low noise amplifier 22 at the time of mixing of the output reference signal of the oscillator 11i. With respect to the Q component SQ, a DC offset component resulting from signal leaking from the mixer 23q to the low noise amplifier 22 side and reflection by the low noise amplifier 22 is superimposed on the Q component SQ and outputted to the digital signal processing circuit 27q.

The digital signal processing circuits 27i and 27q correct the differential voltage to 0 at a predetermined time ta and shifts only the differential voltage corrected to 0 during an entire period of data acquisition. As a result, the DC offset components of the I component SI and the Q component SQ in the period from time t1 to time t2 and the period from time t3 to time t4 can substantially be corrected to 0. The DC offset components of the I component SI and the Q component SQ in the period from time t2 to time t3 can be reduced sufficiently.

According to the first embodiment, the control circuit 7 changes over both of the switches 13 and 21 to the off-state and, under this state, the mixers 23i and 23q mix amplifier reflection signals, which leak from the mixers 23i and 23q to the low noise amplifier 22 side and are reflected by the low noise amplifier 22. The low-pass filters 24i and 24q reduce the signal components of the double frequencies of the output signals of the mixers 23i and 23q, respectively, and apply the same to the digital signal processing circuits 27i and 27q. The digital signal processing circuits 27i and 27q can calculate the DC offset components of the I component SI and the Q component SQ. By shifting the difference of the DC offset component from the I component SI and the Q component SQ, which are calculated normally, during the entire data acquisition period, the influence of the DC offset component can be corrected.

The control circuit 7 can calculate the DC offset components by turning on and off the switches 13 and 21 while using the conventional circuit configuration. As a result, no additional circuit need be provided.

Although it is conventionally possible to transmit a signal from a transmitter after phase-modulation, its circuit configuration becomes complicated. Although it is also possible to reduce a signal by an attenuator, the attenuator itself tends to become a noise source. For this reason, according to the first embodiment, the transmitter 2 transmits the differential signal of the predetermined frequency so that an un-modulated excitation signal is inputted to the SAW device 5. As a result, the phase delay component $\theta$ caused in the SAW device 5 can be calculated without using a phase-modulation circuit, which results in a complicated circuit configuration, or an attenuator, which results in a noise source.

(Second Embodiment)

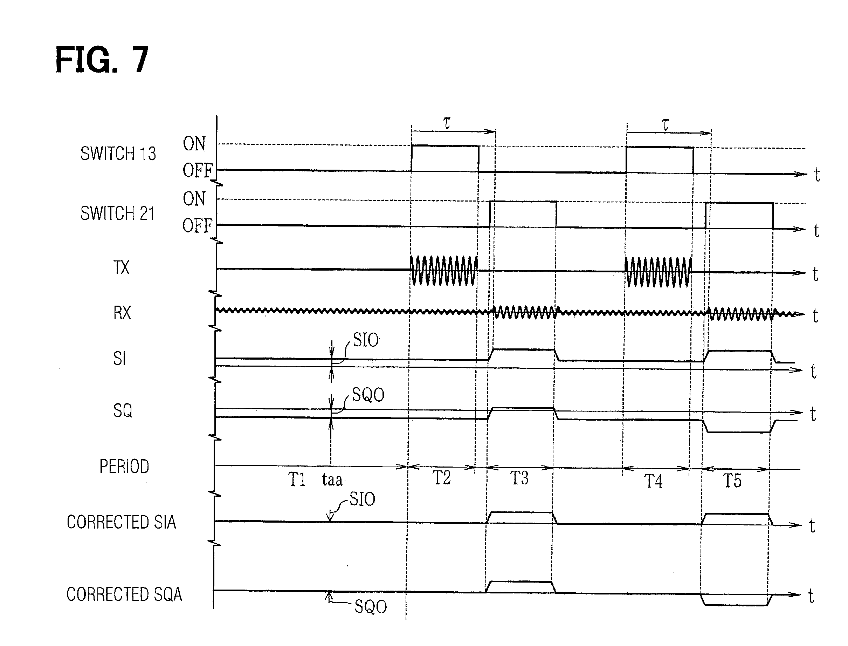

FIG. 7 shows a second embodiment. In the second embodiment, the switches 13 and 21 are turned on and off independently from each other. Both of the switches 13 and 21 are changed over to the off-state after the transmitter 2 outputs the differential signal of the oscillator 11 to the SAW device 5 but before the receiver 3 receives the signal propagating the SAW device 5. Further, in the second embodiment, a predetermined calibration period T1 is provided to calculate the DC offset components before the transmitter 2 and the receiver 3 perform signal transmission and reception operations through the SAW device 5.

According to the second embodiment, the control circuit 7 changes over the switches 13 and 21 to the on-state or the off-state in a sequence shown in FIG. 7. The digital signal processing circuits 27i and 27q calculate first an I offset component SIO and a Q offset component SQO in the calibration period T1 and then calculate the I component SI and the Q component SQ, respectively. The digital signal processing circuits 27i and 27q subtract the I offset component SIO and the Q offset component SQO from the I component SI and the Q component SQ, respectively.

The control circuit 7 first changes over both of the switches 13 and 21 to the off-state. Under this state, the digital signal processing circuit 27i acquires the I component SI and the digital signal processing circuit 27q acquires the Q component SQ. In FIG. 7, TX indicates a transmission signal of the transmitter 2 and RX indicates a reception signal after processing by the mixer 23i or 23q.

The digital signal processing circuit 27i receives the signal, on which the I offset component is superimposed, and the digital signal processing circuit 27q receives the signal, on which the Q offset component SQO is superimposed. In the second embodiment, the calibration period T1 is provided before all transmission and reception processing. The digital signal processing circuits 27i and 27q calculate the I offset component SIO and the Q offset component SQO at a predetermined time taa in the period T1, respectively, and subtract the I offset component SIO and the Q offset component SQO calculated at the predetermined time taa thereby to reflect on the actual signals.

Specifically, the digital signal processing circuits 27i and 27q acquires the I offset component SIO and the Q offset component SQO at time taa and store them in the memories 28i and 28q as correction values, respectively. The control circuit 7 then changes over the transmission changeover switch 13 to the on-state in a period T2 so that the transmitter 2 transmits the oscillation signal to the SAW device 5 (period T2) as the transmission signal. The oscillation signal thus propagates the SAW device 5. The signal transmitted in the transmission period T2 arrives at the receiver 3 with a propagation delay period T of the SAW device 5 and is received as the reception signal RX. The transmission period T2 is set to be shorter than the propagation delay period T.

The control circuit 7 changes over the transmission changeover switch 13 to the off-state after an elapse of the transmission period T2 and changes over the switch 21 to the on-state (period T3) before (immediately before) the elapse of the propagation delay period T. Thus the reflection signal arrives at the receiver 3 after the switch 21 is turned on. In the receiver 3 side, the low noise amplifier 22 amplifies the reception signal RX passing through the SAW device 5 and the mixers 23i and 23q mix the amplified signals with the reference signals outputted from the n/2 phase shifter 6.

The low-pass filters 24i and 24q filter the reception signals RX, respectively. The digital signal processing circuits 27i and 27q receive the filtered signals and store them as the I component SI and the Q component SQ in the memories 28i and 28q, respectively. The digital signal processing circuits 27i and 27q retrieve the I offset component SIO and the Q offset component SQO from the memories 28i and 28q, respectively, and perform correction processing by subtracting the I offset component SIO and the Q offset component SQO from the I component SI and the Q component SQ, respectively. With this correction, as shown in FIG. 7 as a corrected I component SIA and a corrected Q component SQA, the digital signal processing circuits 27i and 27q can acquire the corrected I component SIA and the corrected Q component SQA, respectively.

The same operation is repeated thereafter. The control circuit 7 changes over the switch 21 to the off-state and then changes over the transmission changeover switch 13 to the on-state. The transmitter 2 transmits the differential signal from the oscillator 11 in a transmission period T4. After an elapse of the propagation delay period T, the receiver 3 receives the reception signal RX in a reception period T5. At this time, the digital signal processing circuits 27i and 27q perform the correction processing by subtracting the I offset component SIO and the Q offset component SQO stored in the memories 28i and 28q from the I component SI and the Q component SQ of the reception signal RX received in the reception period T5, respectively. The series of processing described above is repeated.

According to the second embodiment, the control circuit 7 and the digital signal processing circuits 27i and 27q calculate the I offset component SIO and the Q offset component SQO and store those values in the memories 28i and 28q, respectively, in the calibration period T1, in which the control circuit 7 changed over the switches 13 and 21 to the off-state. The digital signal processing circuits 27i and 27q correct the I component SI and the Q component SQ of the reception signal RX by using the I offset component SIO and the Q offset component SQO stored in the memories 28i and 28q thereby to output the corrected I component SIA and the corrected Q component SQA, respectively. Thus, the DC offset component can be reduced sufficiently and the corrected I component SIA and the corrected Q component SQA can be acquired.

In the second embodiment, the control circuit 7 controls the switches 13 and 21 independently to turn on and off. Further, a period is provided for the circuit 7 to turn off both of the switches 13 and 21 after the transmission period T2 and before the reception period T3. As a result, even when the receiver 3 receives the surge component or the ringing component from the SAW device 5 immediately after the transmission periods T2 and T4, the reception changeover switch 21, which is in the off-state, can cut off the surge component and the ringing component and protect the low noise amplifier 22.

(Third Embodiment)

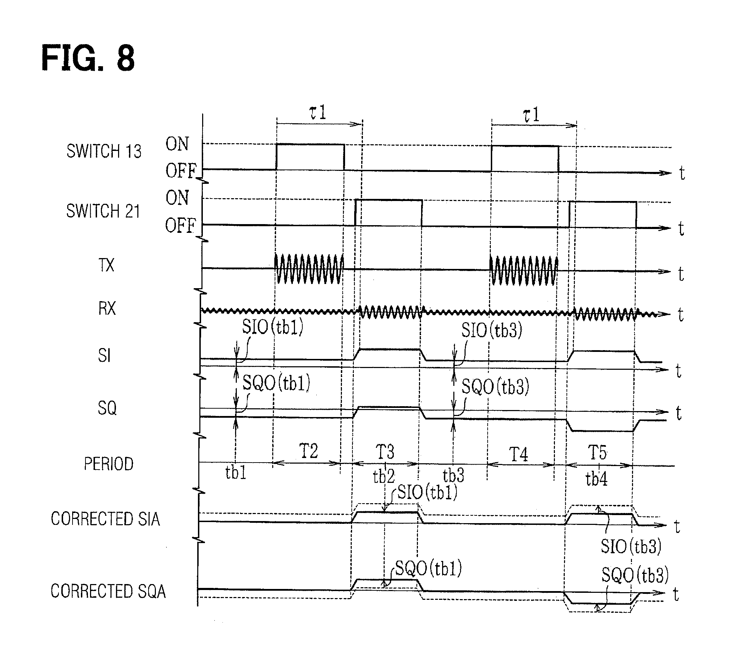

FIG. 8 shows a third embodiment. In the third embodiment, the switches 13 and 21 are turned on and off independently from each other. Both of the switches 13 and 21 are changed over to the off-state after the transmitter 2 outputs the differential signal of the oscillator 11 to the SAW device 5 but before the receiver 3 receives the reflection signal propagating the SAW device 5. Further, in the third embodiment, the DC offset components are calculated in each cycle period of signal transmission and reception processing, in which the transmitter 2 transmits the signal and the receiver 3 receives the signal from the SAW device 5.

In the third embodiment, as shown in FIG. 8, the control circuit 7 turns off both of the switches 13 and 21 immediately before the transmission period T2. In this state, the digital signal processing circuit 27i acquires the I component SI and the digital signal processing circuit 27q acquires the Q component SQ. At time tb1, the digital signal processing circuit 27i receives an I component SI, which includes the I offset component SIO, and the digital signal processing circuit 27q receives a Q component SQ, which includes the Q offset component SQO.

The digital signal processing circuit 27i stores the I component SI, which is immediately before the transmission period T2, in the memory 28i as the I offset component SIO(tb1). The digital signal processing circuit 27q stores the Q component SQ, which is at this time tb1, in the memory 28q as the Q offset component SQO(tb1).

The control circuit 7 then changes over the transmission changeover switch 13 to the on-state in the transmission period T2 so that the transmitter 2 transmits the oscillation signal to the SAW device 5. The control circuit 7 changes over the transmission changeover switch 13 to the off-state after the elapse of the transmission period T2 and changes over the switch 21 to the on-state during the reception period T3 before an elapse of the propagation delay period T1. Thus the transmission signal Tx of the transmitter 2 arrives at the receiver 3 after propagation through the SAW device 5 after the switch 21 is turned on.

In the receiver 3 side, the low noise amplifier 22 amplifies the reception signal RX passing through the SAW device 5 and the mixers 23i and 23q mix the amplified signal with the reference signals outputted from the oscillator 11 through the n/2 phase shifter 6. The low-pass filters 24i and 24q filter the reception signals RX, respectively. The A/D converters 26i and 26q A/D-convert filtered signals, respectively. The digital signal processing circuits 27i and 27q receive the A/D-converted signals and store them as the I component SI(tb2) and the Q component SQ(tb2) in the memories 28i and 28q (time tb2), respectively.

The digital signal processing circuits 27i and 27q retrieve the I offset component SIO(tb1) and the Q offset component SQO(tb1), which are calculated at the time tb1, from the memories 28i and 28q, respectively. The digital signal processing circuits 27i and 27q calculate a true I component SIA(tb2) and a true Q component SQ(tb2) by subtracting the I offset component SIO(tb1) and the Q offset component SQO(tb1) from the I component SI(tb2) and the Q component SQ(tb2), respectively.

After completing one cycle of the signal transmission and reception processing as described above, the circuit 7 turns off both of the switches 13 and 21 again immediately before the transmission period T4. In this state, the digital signal processing circuit 27i acquires the I component SI and the digital signal processing circuit 27q acquires the Q component SQ. At time tb3, the digital signal processing circuit 27i receives the I component, in which the I offset component SIO is included, and the digital signal processing circuit 27q receives the Q component, in which the Q offset component SQO is included. At this time, the digital signal processing circuit 27i stores the I component SI, which is of time tb3 immediately before the transmission period T4, in the memory 28i as the I offset component SIO(tb3). The digital signal processing circuit 27q stores the Q component SQ, which is of time tb3, in the memory 28q as the Q offset component SQO(tb3).

The same operation is repeated thereafter. At time tb4, the digital signal processing circuits 27i and 27q store the I component SI(tb4) and the Q component SQ(tb4) in the memories 28i and 28q (time tb4), respectively. The digital signal processing circuits 27i and 27q retrieve the I offset component SIO(tb3) and the Q offset component SQO(tb3), which are of time tb3, from the memories 28i and 28q, respectively. The digital signal processing circuits 27i and 27q then calculate the true I component SIA(tb4) and the true Q component SQA(tb4) by subtracting the I offset component SIO(tb3) and the Q offset component SQO(tb3) from the I component SI(tb4) and the Q component SQ(tb4), which are calculated and stored in the memories 28i and 28q at time tb4, respectively.

In the third embodiment, calculation of the DC offset components in each cycle period of the signal transmission and reception processing is repeated as described above. The I offset component SIO and the Q offset component SQO acquired immediately before the transmission periods T2 and T4 are subtracted from the I component SI and the Q component SQ, which are acquired in each cycle period. For this reason, even when surrounding temperature of the SAW device 5 varies and a resulting temperature drift causes variations in the I offset component SIO and the Q offset component SQO from time to time, this influence of temperature variation can be detected. That is, the I offset component SIO and the Q offset component SQO, which are caused by variation of temperature around the SAW device 5, can be detected nearly on a real time basis. For vehicle application, it is desired to detect an influence of harsh temperature varying circumstance in real-time and correct the I offset component SIO and the q offset component, this embodiment is advantageous.

In the third embodiment, the control circuit 7 controls the switches 13 and 21 independently to turn on and off. Further, a period is provided for the circuit 7 to turn off both of the switches 13 and 21 between the transmission period T2 and the reception period T3 as well as between the transmission period T4 and the reception period T5. As a result, even when the receiver 3 receives the surge component or the ringing component from the SAW device 5 immediately after the transmission periods T2 and T4, the reception changeover switch 21, which is in the off-state, can cut off the surge component and the ringing component and protect the low noise amplifier 22.

It is essential between the transmission periods T2, T4 and the propagation delay period T1 that the propagation delay period is longer than the transmission periods T2, T4. However, it is sometimes impossible to provide a sufficient time difference margin between the propagation delay period T1 and the transmission periods T2, T4 because of structure of the SAW device 5 (propagation delay period T), time constraints to the transmission periods T2, T4 and time constraints to the reception periods T3, T5. Thus it is sometimes difficult to calculate the DC offset components between the transmission period T2 and the reception period T3 as well as between the transmission period T3 and the reception period T5. In this case, it is preferred to calculate the I offset component SIO and the Q offset component SQO at time tb1 and tb3, which are immediately before the transmission periods T2 and T4 as described above.

(Fourth Embodiment)

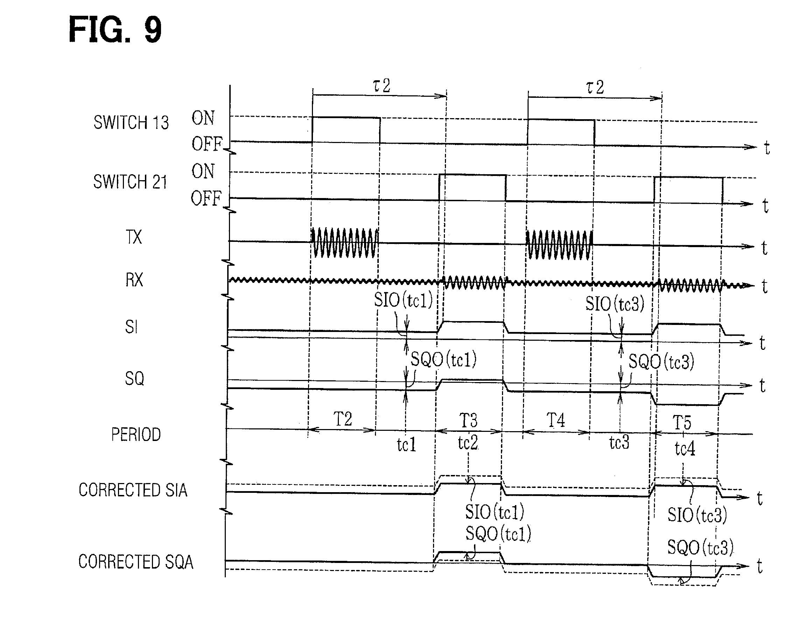

FIG. 9 shows a fourth embodiment. In the fourth embodiment, the switches 13 and 21 are turned on and off independently from each other. Both of the switches 13 and 21 are changed over to the off-state after the transmitter 2 outputs the differential signal of the oscillator 11 as the transmission signal to the SAW device 5 but before the receiver 3 receives the signal propagating the SAW device 5 as the reflection signal. Further, in the fourth embodiment, the DC offset components are calculated in each cycle period of signal transmission and reception processing, in which the transmitter 2 transmits the transmission signal and the receiver 3 receives the reflection signal from the SAW device 5.

As shown in FIG. 9, in a case that the SAW device 5 is not so retrained structurally and a propagation delay period T2 can be set to be sufficiently longer than the transmission periods T2 and T4, the time margin between the propagation delay period T2 and the transmission periods T2, T4 can be set longer. In this case, the control circuit 7 turns both of the switches 13 and 21 between the transmission period T2 and the reception period T3. The digital signal processing circuits 27i and 27q calculate the I offset component SIO(tc1) and the Q component SQO(tc1) of the DC offset at a predetermined time between the periods T2 and T3, respectively, and store the calculated offset components in the memories 28i and 28q, respectively.

The circuit 7 then changes over the switch 21 to the on-state. The digital signal processing circuits 27i and 27q acquire the I component SI and the Q component SQ and store in the memories 28i and 28q at time tc2, respectively. The digital signal processing circuit 27i performs corrections by subtracting the I offset component SIO(tc1) from the I component SI(tc2) and by subtracting the Q offset component SQO(tc1) from the Q component SQ(tc2). The signal processing apparatus 1 for a surface acoustic wave sensor performs this sequence of processing in one cycle period and similarly repeats the DC offset correction processing following the transmission period T4, the DC offset calculation time tc3 and the reception period T5 so that the DC offset components can be corrected in sequence.

That is, according to the fourth embodiment, the I offset component SIO(tc1) and the Q offset component SQO(tc1) of the DC offset are calculated after the signal transmission (periods T2, T4) of the transmitter 2 and before the signal reception (periods T3, T5) of the receiver 3 from the SAW device 5, and subtracted from the I component SI and the Q component SQ, which the receiver 3 receives from the SAW device 5, respectively, for correction. For this reason, even when surrounding temperature of the SAW device 5 varies and a resulting temperature drift causes variations in the I offset component SIO and the Q offset component SQO from time to time, this influence of temperature variation can be detected. That is, the DC offset components, which are caused by variation of temperature around the SAW device 5, can be detected nearly on a real time basis.

Also in the fourth embodiment, the control circuit 7 controls the switches 13 and 21 independently to turn on and off. Further, a period is provided for the circuit 7 to turn off both of the switches 13 and 21 between the transmission period T2 and the reception period T3. As a result, even when the receiver 3 receives the surge component or the ringing component from the SAW device 5 immediately after the transmission periods T2 and T4, the reception changeover switch 21, which is in the off-state, can cut off the surge component and the ringing component and protect the low noise amplifier 22.

According to the fourth embodiment, since the SAW device 5 has the propagation delay period T2, which is longer than the propagation delay period T1 of the third embodiment, the phase variation becomes large relative to the same physical quantity and hence sensing sensitivity can be improved.

(Fifth Embodiment)

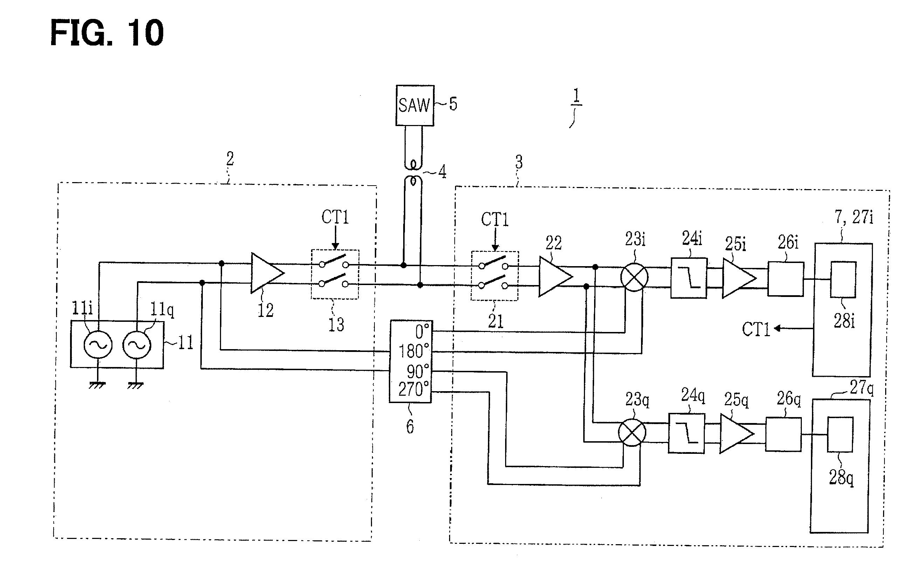

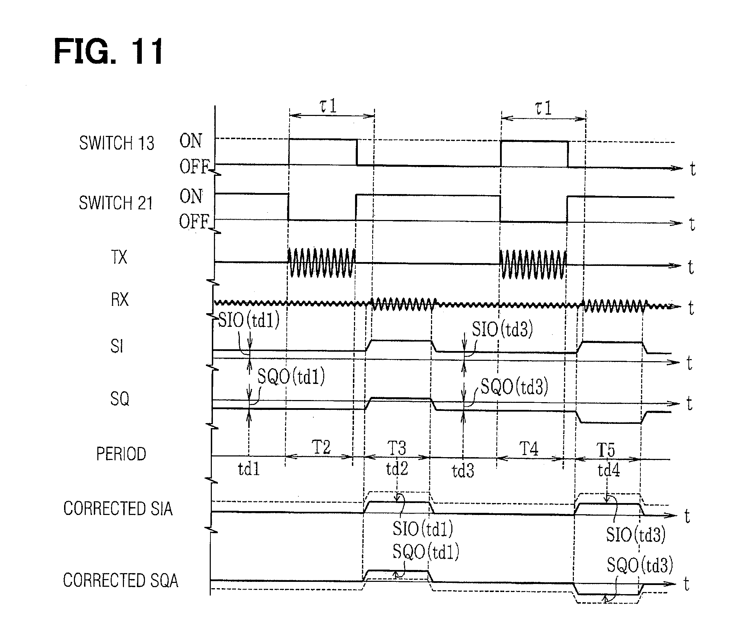

FIG. 10 and FIG. 11 show a fifth embodiment. In the fifth embodiment, the transmission changeover switch 13 and the reception changeover switch 21 are changed over complimentarily to each other. In the fifth embodiment, the DC offset components are calculated in each cycle period of the signal transmission and reception processing, in which the transmitter 2 transmits the signal and the receiver 3 receives the signal from the SAW device 5.

FIG. 10 shows schematically an electrical circuit configuration of the signal processing apparatus 1 for a surface acoustic wave sensor as an alternative embodiment of FIG. 1. In the first to fourth embodiments, the control circuit 7 outputs two kinds of on/off control signals CT1 and CT2 to the switches 13 and 21 to turn on and off the switches 13 and 21 independently. According to the fifth embodiment, the control circuit 7 outputs only one kind of control signal CT1 to the switches 13 and 21 to change over the switches 13 and 21 complementarily.

For example, when the control circuit 7 once outputs the on/off control signal CT1 to the switches 13 and 21 at the same time, the transmission changeover switch 13 is changed over to the on-state and the switch 21 is changed over to the off-state. When the control circuit 7 outputs the on/off control signal CT1 to the switches 13 and 21 at the same time again, the transmission changeover switch 13 is changed over to the off-state and the switch 21 is changed over to the on-state.

As shown in a time chart of FIG. 11, the control circuit 7 turns the transmission changeover switch 13 to the on-state only during the transmission periods T2 and T4 and turns the transmission changeover switch 13 to the off-state in the other periods. That is, the switch 21 is turned to the off-state during the transmission periods T2 and T4 and turned to the on-state during the other periods.

In this case, since the switch 21 is maintained in the on-state in the periods other than the transmission periods T2 and T4, the receiver 3 receives the reflection signal developed by reflection in the SAW device 5 or the like and the leak signal leaking from the transmitter 2 though the switches 13 and 21. It is confirmed through simulation however that, even when the switch 21 is controlled to be in the on-state, the reflection wave is not developed by the SAW device 5 or is almost negligibly small in the periods other than the time of arrival of the reflection signal from the SAW device 5 owing to the design of propagation path in the SAW device 5 of the signal processing apparatus 1. For this reason, only signal components resulting from reflection of the reference signals, which leak to the low noise amplifier 22 side, are detected at the inputs of the mixers 23i and 23q and hence the DC offset components can be detected by self-mixing.

In the fifth embodiment, as shown in FIG. 11 and similarly to the third embodiment, the digital signal processing circuits 27i and 27q perform calculation processing of the DC offset components(td1, td3) immediately before the transmission periods T2 and T4 in each one cycle period of the signal transmission and reception processing and calculate the I offset components SIO(td1), SIO(td3) and the Q offset components SQO(td1), SQO(td3). The digital signal processing circuits 27i and 27q calculate and correct the DC offset components by subtracting the I offset components SIO(td1), SIO(td3) and the Q offset components SQO(td1), SQO(td3) from the I components SI(td2), SI(td4) and the Q components SQ(td2), SQ(td4), respectively, which are acquired in each cycle period. Thus the fifth embodiment provides the similar advantages as the third embodiment.

Since the control circuit 7 can change over the on/off state of the switches 13 and 21 by one kind of the on/off control signal CT1, its configuration and control processing can be simplified as much as possible.

(Sixth Embodiment)

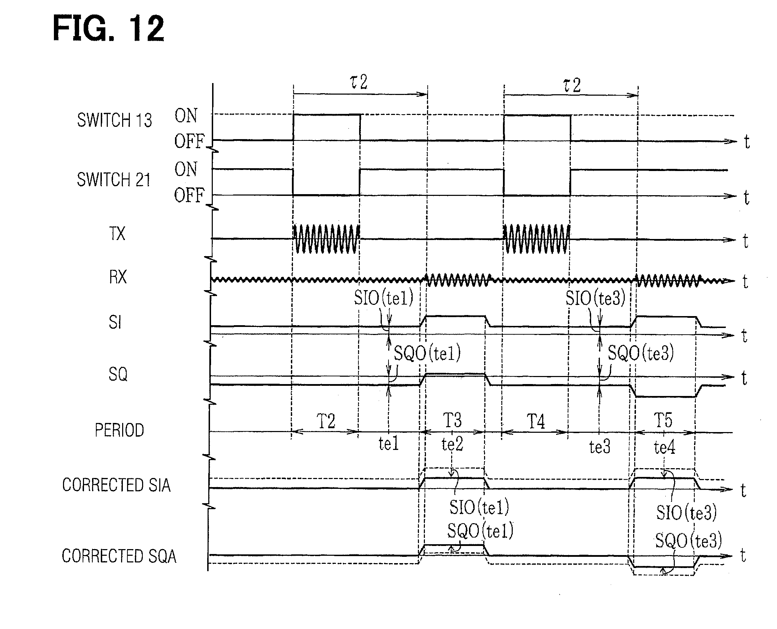

FIG. 12 shows a sixth embodiment. In the sixth embodiment, the transmission changeover switch 13 and the reception changeover switch 21 are changed over complimentarily to each other. In the sixth embodiment, the DC offset components, which are present after the transmission of the differential signal from the transmitter 2 to the SAW device 5 and before the reception of the reflection signal from the SAW device 5 by the receiver 3, are calculated.

In the sixth embodiment, the signal processing apparatus 1 has the same circuit configuration as FIG. 10. The circuit 7 outputs one kind of the on/off control signal CT1 to the switches 13 and 21 to thereby change over the switches 13 and 21 complementarily. This operation is the same as in the fifth embodiment.

In the sixth embodiment, as shown in FIG. 12 and similarly to the fourth embodiment, the digital signal processing circuits 27i and 27q perform the DC offset calculation processing (te1, te3) between the transmission period T2 and the reception period T3 in one cycle period and between the transmission period T4 and the reception period T5 in the next cycle period and calculates the I offset components SIO(te1), SIO(te3) and the Q offset components SQO(te1), SQO(te3). The digital signal processing circuits 27i and 27q correct the DC offsets by subtracting the I offset components SIO(te1), SIO(te3) and the Q offset components SQO(te1), SQO(te3) from the I components SI(te2), SI(te4) and the Q components SQ(te2), SQ(te4), which are acquired in each cycle period, respectively. By thus using the propagation delay period T2, the DC offset components can be calculated and used for correction.

The sixth embodiment provides the same advantages as the fourth embodiment. Since the control circuit 7 can change over the on/off state of the switches 13 and 21 by one kind of the on/off control signal CT1, its configuration and control processing can be simplified as much as possible.

(Seventh Embodiment)

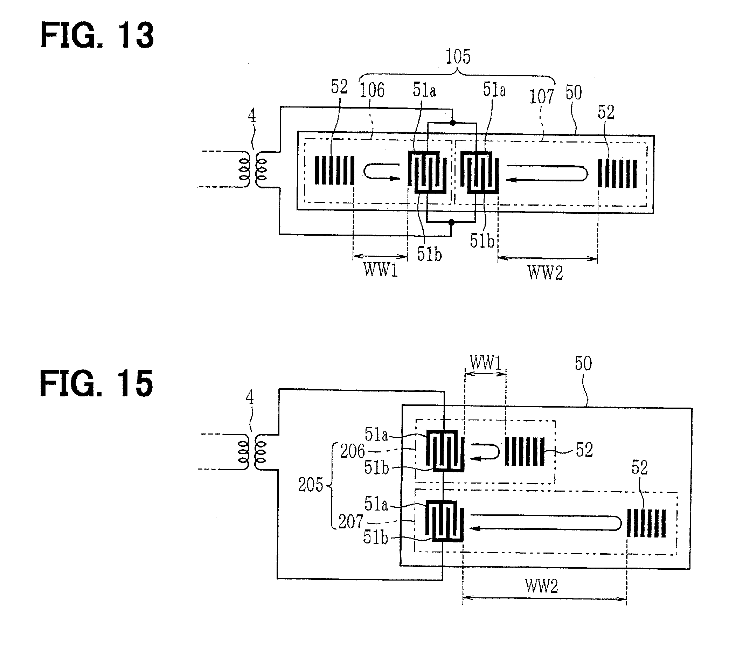

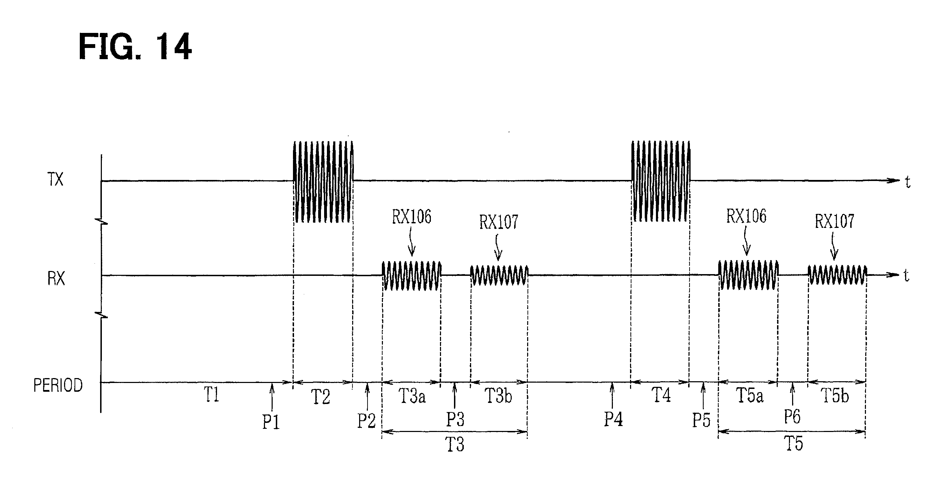

FIG. 13 and FIG. 14 show a seventh embodiment. In the foregoing embodiments, the receiver 3 is configured to calculate the offset component at each reception of the reflection signal from the SAW device 5 in response to each signal transmission of the transmitter 2. In the seventh embodiment, a SAW device 105 is provided with plural (two) SAW device sections 106 and 107, which are arranged in parallel, and the receiver 3 receives plural reflection signals from the SAW device 105 in response to one signal transmission of the transmitter 2.

A plan view of the SAW device 105 is shown in FIG. 13. As shown in FIG. 13, the SAW device unit 105 includes plural (two) device sections 106 and 107, which are connected in parallel, and is provided in place of the SAW device 5 of the foregoing embodiments. Each of the device sections 106 and 107 is mounted on a single substrate 50 and is formed to have generally the same internal structure (driving electrode 51a, driving electrode 51b and reflector 52 shown in FIG. 2) as the SAW device 5.

In the SAW device 105 shown in FIG. 13, the device sections 106 and 107 are arranged in parallel in a predetermined direction (signal propagation direction). The internal structure (51a, 51b, 52) are arranged to be in line symmetry relative to a center point between the SAW device sections 106 and 107. That is, the driving electrodes 51a, 52a of the device section 106 and the driving electrodes 51a, 52a of the device section 107 are arranged to closely face each other. The reflector 52 of the device section 106 and the reflector 52 of the device section 107 are spaced apart from each other. Input impedances of the device sections 106 and 107 can be adjusted by adjusting a size of an opening of the comb teeth part of the driving electrodes 51a and 51b. As a result, impedances can be matched between the device sections 106, 107 and the antenna 4.

Assuming that a distance between the driving electrodes 51a, 51b and the reflector 52 of the device section 106 is WW1 and a distance between the driving electrodes 51a, 51b and the reflector 52 of the device section 107 is WW2, the internal structure (51a, 51b, 52) of each device section 106, 107 is arranged to satisfy that the distance WW1 is shorter than the distance WW2. In this case, a length of the propagation path of the device section 106 is about 2×WW1 and a length of the propagation path of the device section 107 is about 2×WW2.

As understood from FIG. 14, which shows a characteristic of signal transmission and reception between the transmitter 2 and the receiver 3, when the transmitter 2 transmits one wave set of the transmission signal TX (periods T2, T4), the receiver 3 receives two wave sets of the reflection signals RX (periods T3a, T3b, T5a, T5b). Since the propagation path length (about 2× WW1) of the device section 106 is shorter than the propagation path length (about 2×WW2) of the SAW device section 106 in the SAW device 105, the signal RX106 propagating through the device section 106 arrives at the receiver 3 earlier and the signal RX107 propagating thorough the device section 107 arrives at the receiver 3 later.

In this case, the control circuit 7 controls the switches 13 and 21 to enable the receiver 3 to receive those plural (two) reflected waves. The digital signal processing circuit 27i may correct the I offset component SIO and the digital signal processing circuit 27q correct the Q offset component SQO by using values acquired at time P1 in the calibration period T1, time P2 or P5 between the transmission period T2 and the reception period T3 and time P4 in one cycle period of the transmission period T2 and the reception period T3.

Further, in the seventh embodiment, the digital signal processing circuits 27i and 27q may calculate the offset components SIO and SQO for correction of the DC offsets SI and SQ, respectively, by using values acquired at time P3 between the periods T3a and T3b for receiving the plural reflection signals or at time P6 between the periods T5a and T5b for receiving the plural reflection signals. The receiver 3 can perform the temperature correction processing in real time by receiving those two reflected waves and cancel a phase change, which depends on a temperature change.

(Eighth Embodiment)

FIG. 15 shows an eighth embodiment. In the eighth embodiment, a SAW device has plural (two) SAW device sections 206 and 207, which are connected in series. The receiver 3 receives the reflected signals from each of the plural device sections.

A plan view of the SAW device 205 is shown in FIG. 15. As shown in FIG. 15, the SAW device 205 includes plural (two) device sections 206 and 207, which are connected in series, and is provided in place of the SAW device 5 of the foregoing embodiments. Each of the device sections 206 and 207 is mounted on the single substrate 50 and is formed to have generally the same internal structure (driving electrode 51a, driving electrode 51b and reflector 52 shown in FIG. 2) as the SAW device 5.

The SAW device 205 shown in FIG. 15 includes the device sections 206 and 207. The device section 206 has the driving electrodes 51a, 51b and the reflector 52, which are spaced apart from each other in a predetermined direction. The device section 207, which is between the driving electrodes 51a, 51b and the reflector 52, also has the driving electrodes 51a, 51b and the reflector 52, which are spaced apart from each other in the predetermined direction. Thus, in each device section 206, 207, the signal propagates in the predetermined direction. Assuming that a distance between the driving electrodes 51a, 51b and the reflector 52 of the device section 206 is WW1 and a distance between the driving electrodes 51a, 51b and the reflector 52 of the device section 207 is WW2, the distance WW1 is shorter than the distance WW2. In this case, a length of the propagation path of the device section 206 is about 2×WW1 and a length of the propagation path of the device section 207 is about 2×WW2.

The device sections 206 and 207 are spaced apart in a direction, which crosses the predetermined direction of wave propagation described above. Here, the driving electrode 51a of the device section 206 and the driving electrode 51b of the device section 207 are connected to the antenna 4. The driving electrode 51b of the device section 206 and the driving electrode 51a of the device section 207 are connected electrically. Thus, the device sections 206 and 207 are connected in series. Input impedances of the device sections 206 and 207 can be adjusted by adjusting a size of an opening of the comb teeth part of the driving electrodes 51a and 51b. As a result, impedances can be matched between the device sections 206, 207 and the antenna 4.

In the SAW device 205 configured as described above, the receiver 3 receives two reflection signals as shown in FIG. 14 in the similar manner as the seventh embodiment. In the eighth embodiment, similarly to the seventh embodiment, the digital signal processing circuits 27i and 27q may calculate the I offset component SIO and the Q offset component SQO for correction of the I offset and the Q offset, respectively, by using values acquired at any one of times P1 to P6. The receiver 3 can perform the temperature correction processing in real time by receiving those two reflected waves and cancel a phase change, which depends on a temperature change.

(Other Embodiment)

The present invention is not limited to the embodiments described above but may be modified as follows for example.

Although the I offset component SIO and the Q offset component SQO are calculated in a period of one cycle of the calibration period T1, the transmission period Tx and the reception period Rx. Alternatively, the I offset component SIO and the Q offset component SQO may be calculated at any time, which is other than the predetermined period (for example, at every plural periods) and the transmission periods T2, T4.

In the third and fifth embodiments, the digital signal processing circuits 27i and 27q calculate the DC offset components and the memories 28i and 28q store the calculated DC offset components before one cycle period of the transmission and reception processing of the transmitter 2 and the receiver 3. Alternatively, without being limited to those embodiments, the digital signal processing circuits 27i and 27q may calculate the DC offset components perform corrections after the one cycle period.

Although the low noise amplifier 22 is provided at the initial stage of the receiver 3, amplifiers may be provided at plural stages, which are two or more stages.

Although filters are formed of the low-pass filters 24i and 24q, the filters may be formed of other types of filters such as band-pass filters.

The antenna 4 need not be provided. That is, the switches SW1, SW2 and the SAW device 5 may be connected directly or may be connected wirelessly.

The receiver is configured as a single-conversion type, in which the mixers are provided at only one stage. Alternatively, the receiver may be a double-conversion type, in which the mixers are provided at two stages.

In the embodiments described above, the DC offset components of the I component SI and the Q component SQ are calculated and used for corrections. Alternatively, only one of the DC offset components may be calculated and used for correction. Further, only the DC offset components may be calculated and no correction processing may be performed.

In the embodiments, the circuit 7 centrally controls the switches 13 and 21 to turn on and off. Alternatively, plural control circuits may be provided separately so that each control circuit controls at least one of the switches 13 and 21.

**Claims**

1.  A signal processing apparatus (1) for a surface acoustic wave device (5, 105, 205), which propagates a signal by a surface acoustic wave to detect a physical quantity based on a phase change of the signal;
    at least one control circuit (7);
    a transmitter (2) including an oscillator (11) for outputting a differential signal of a predetermined frequency and a transmission changeover switch (13), wherein the transmission changeover switch (13) is configured to turn on and off a connection between the surface acoustic wave device (5, 105, 205) and the oscillator (11) under control of the control circuit (7), and the transmitter (2) is configured to transmit the differential signal of the oscillator (11) to the surface acoustic wave device (5, 105, 205) as a transmission signal; and
    a receiver (3) including an amplifier (22), a mixer (23i, 23q) and a filter (24i, 24q), the mixer (23i, 23q) mixing an amplifier output signal of the amplifier (22) with the differential signal of the oscillator (11), and the filter (24i, 24q) reducing a frequency component, which is included in a mixer output signal of the mixer (23i, 23q) and twice as high as the predetermined frequency, wherein the receiver (3) is configured to receive a sensor reflection signal as a reception signal, which results from propagation and reflection of the transmission signal in the surface acoustic device (5, 105, 205), and mixes the reception signal with the differential signal outputted from the oscillator (11) as a reference signal by the mixer (23i, 23q),
    **characterized in that**
    the receiver (3) includes a calculation circuit (27i, 27q) for calculating a filter output signal of the filter (24i, 24q) as a DC offset component when the transmission changeover switch (13) is controlled to be in an off-state by the control circuit (7), the filter output signal of the filter (24i, 24q) being produced by mixing the reference signal of the oscillator (11) and an amplifier reflection signal, which results from the reference signal of the oscillator (11) leaking from the mixer (23i, 23q) to the amplifier (22) and reflected by the amplifier (22), and by reducing the frequency component, which is twice as high as the predetermined frequency.

2.  The signal processing apparatus for a surface acoustic wave sensor according to claim 1, wherein:

    the receiver (3) includes a reception changeover switch (21), which is turned on and off the connection between the surface acoustic wave device (5, 105, 205) and the amplifier (22) under control by the control circuit (7); and
    the calculation circuit (27i, 27q) calculates the filter output signal of the filter (24i, 24q) as the DC offset component when the transmission changeover switch (13) of the transmitter (2) and the reception changeover switch (21) of the receiver (3) are both turned to the off-state by the control circuit (7).

3.  The signal processing apparatus for a surface acoustic wave sensor according to claim 1 or 2, wherein:

    the calculation circuit (27i, 27q) calculates the filter output signal of the filter (24i, 24q) as the DC offset component in a calibration period (T1) before signal transmission and reception processing, in which the transmitter (2) transmits the differential signal of the oscillator (11) to the surface acoustic wave device (5, 105, 205) and the receiver (3) receives the sensor reflection signal from the surface acoustic wave device (5, 105, 205).

4. The signal processing apparatus for a surface acoustic wave sensor according to claim 1 or 2, wherein:

the calculation circuit (27i, 27q) calculates the DC offset component in every one cycle period of the signal transmission and reception processing, which includes transmission of the differential signal of the oscillator (11) from the transmitter (2) to the surface acoustic wave device (5, 105, 205) and reception of the sensor reflection signal from the surface acoustic wave device (5, 105, 205) by the receiver (3) by mixing the differential signal of the oscillator (11) as the reference signal.

5. The signal processing apparatus for a surface acoustic wave sensor according to claim 1 or 2, wherein:

the calculation circuit (27i, 27q) calculates the DC offset component of time, which is after transmission of the differential signal of the oscillator (11) from the transmitter (2) to the surface acoustic wave device (5) and before reception of the sensor reflection signal from the surface acoustic wave device (5, 105, 205) by the receiver (3).

6. The signal processing apparatus for a surface acoustic wave sensor according to any one of claims 1 to 5, wherein:

the control circuit (7) is configured to turn on and off the transmission changeover switch (13) and the reception changeover switch (21) independently; and
the control circuit (7) turns off both of the transmission changeover switch (13) and the reception changeover switch (21) after transmission of the differential signal of the oscillator (11) from the transmitter (2) to the surface acoustic wave device (5) and before reception of the sensor reflection signal from the surface acoustic wave device (5).

7. The signal processing apparatus for a surface acoustic wave sensor according to any one of claims 1 to 5, wherein:

the control circuit (7) is configured to turn on and off the transmission changeover switch (13) and the reception changeover switch (21) complementarily by one kind of on/off control signal.

8. The signal processing apparatus for a surface acoustic wave sensor according to any one of claims 1 to 7, wherein:

the calculation circuit (27i, 27q) is further configured to correct the sensor reflection signal received from the surface acoustic wave device (5) by using the DC offset component calculated by the calculation circuit (27i, 27q).

9. The signal processing apparatus for a surface acoustic wave sensor according to any one of claims 1 to 8, wherein:

the surface acoustic wave device (105, 205) includes plural device sections (106, 107, 206, 207) connected in series or in parallel; and
the receiver (3) receives the sensor reflection signal from each of the plural device sections (106, 107, 206, 207) of the surface acoustic wave device (105, 205).

# FIG. 1

EP 2 933 632 A2

# FIG. 2A

# FIG. 2B

# FIG. 3

# FIG. 4

# FIG. 5

# FIG. 6

# FIG. 7

EP 2 933 632 A2

# FIG. 8

EP 2 933 632 A2

# FIG. 9

EP 2 933 632 A2

# FIG. 10

FIG. 11

# FIG. 12

EP 2 933 632 A2

**FIG. 13**

**FIG. 15**

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008151520 A